# Europäisches Patentamt
# European Patent Office
# Office européen des brevets

(19)

(11) Numéro de publication: **0 150 631**
**B1**

(12)

# FASCICULE DE BREVET EUROPÉEN

(45) Date de publication du fascicule du brevet:
**13.01.88**

(51) Int. Cl.⁴: **A 01 F 15/00**

(21) Numéro de dépôt: **84400189.1**

(22) Date de dépôt: **27.01.84**

(54) **Presse à balles cylindriques avec entraînement du rouleau d'amorçage.**

(43) Date de publication de la demande:
**07.08.85 Bulletin 85/32**

(45) Mention de la délivrance du brevet:
**13.01.88 Bulletin 88/2**

(84) Etats contractants désignés:
**DE FR GB IT NL**

(56) Documents cité:
**US-A-4 172 354**
**US-A-4 259 900**

(73) Titulaire: **JOHN DEERE (Société Anonyme), 20, Rue André Dessaux, F-45401 Fleury- les- Aubrais (FR)**

(72) Inventeur: **Anstey, Henry Dennis, RR4 Box 188a, Ottumwa Iowa 52501 (US)**
Inventeur: **Viaud, Jean, 16, Rue de l'Ecole, F-57200 Sarreguemines (FR)**

(74) Mandataire: **Pruvost, Marc Henri, Cabinet ORES 6, Avenue de Messine, F-75008 Paris (FR)**

EP 0 150 631 B1

## Description

La présente invention concerne d'une façon générale les presses à balles cylindriques ou rondes.

Ces presses sont d'un type bien connu et comprennent des jeux de bandes ou courroies qui, par leur déplacement, forment par enroulement à l'intérieur d'une chambre ménagée dans le corps de la presse une balle de forme générale cylindrique à partir de produits de récolte, notamment de fourrage ou de foin, ramassés sur le champ au cours de la progression de la presse. Quand la balle a atteint le diamètre désiré et a été liée, la porte arrière de la presse est ouverte et la balle est déchargée sur le sol. La formation d'une autre balle par enroulement peut être déclenchée ensuite à l'intérieur de la presse.

Les produits destinés à former la balle sont ramassés sur le sol au moyen d'un ramasseur. Ils sont transférés par celui-ci dans la chambre de la presse, entre les brins par des bandes ou courroies qui occupent, au début de l'opération, des positions voisines. Du fait de ce rapprochement et des sens de déplacement opposés de ces brins de bandes ou courroies, les produits ramassés au début de la formation d'une balle ont tendance à s'enrouler et à former le noyau d'une nouvelle balle, dont le diamètre va aller en augmentant, les brins des bandes ou courroies s'écartant l'un de l'autre en fonction de cette augmentation de diamètre de la balle. Ces bandes ou courroies sont alors maintenues sous tension par des rouleaux de tension qui sont eux-mêmes soumis à l'action de ressorts ou de cylindres hydrauliques.

Pour favoriser ce début de formation de la balle, il est prévu de manière connue, au voisinage de l'intervalle ou orifice de pénétration des produits dans la chambre de la presse, un rouleau dénommé rouleau d'amorçage qui est entraîné positivement en rotation à une vitesse périphérique égale à la vitesse linéaire des courroies (US-A-4 172 354).

Dans le cas de certains produits de récolte, notamment de produits destinés à former du fourrage, par exemple de ray-grass, et en particulier dans des conditions humides, des difficultés apparaissent du fait que ces produits ont tendance à s'enrouler autour du rouleau d'amorçage classique, ce qui s'oppose à la formation d'un noyau de balle correct et est en outre à l'origine de bourrages qui peuvent exiger l'arrêt de la presse et qui en conséquence ralentissent le rythme du travail.

Le but de l'invention est de remédier à cet inconvénient des presses existantes.

L'invention concerne en conséquence une presse à balles cylindriques ou rondes comprenant des jeux de bandes ou courroies ménageant une chambre de formation d'une balle par enroulement, ainsi qu'un ramasseur destiné à reprendre les produits de récolte sur le sol pour leur transfert à la chambre de formation de la balle à travers un intervalle ou orifice d'entrée des produits, et un rouleau d'amorçage disposé au voisinage de cet intervalle ou orifice d'entrée des produits et entraîné positivement en rotation à l'aide d'un dispositif d'entraînement caractérisée en ce que ledit dispositif assure un entraînement du rouleau d'amorçage à vitesse plus lente que celle des jeux de bandes ou courroies, ledit dispositif comprenant des moyens pour interrompre cet entraînement en rotation lorsque le noyau de la balle a été formé et lorsque ce rouleau d'amorçage tend à être entraîné par la balle elle-même à une vitesse supérieure à sa vitesse d'entraînement par le dispositif.

Les recherches qui ont abouti à l'invention ont montré que cet entraînement à vitesse lente du rouleau d'amorçage assure avec certitude le début de la formation d'une balle, c'est-à-dire la formation d'un noyau de balle dans la chambre de la presse, tout en évitant un enroulement des produits de récolte autour de ce rouleau d'amorçage. On évite ainsi également l'inconvénient pouvant résulter d'un défaut de formation d'un noyau de balle rond et suffisamment dense, comme cela pourrait se produire si le rouleau d'amorçage était immobile.

L'entraînement du rouleau d'amorçage au début de la formation d'une balle peut être continu ou intermittent.

Suivant un mode de réalisation paraissant avantageux, cet entraînement est assuré à partir du rouleau fixe d'entraînement des bandes ou courroies au voisinage dduquel le rouleau d'amorçage est généralement placé, par l'intermédiaire d'un dispositif ou mécanisme réducteur.

Suivant une autre particularité de l'invention, un dispositif à roue libre ou accouplement à effet unidirectionnel est prévu entre le rouleau d'amorçage et son dispositif d'entraînement à vitesse lente, de façon telle que le rouleau d'amorçage puisse être entraîné librement par la balle à la vitesse requise après la formation du noyau.

Suivant un mode de réalisation possible, il est prévu, sur le rouleau d'entraînement des bandes ou courroies ou sur son arbre, un excentrique ou analogue, qui assure l'entraînement à vitesse lente du rouleau d'amorçage par l'intermédiaire d'une bielle et d'un accouplement à roue libre prévu sur l'arbre du rouleau d'amorçage. Dans ce cas, cet entraînement du rouleau d'amorçage s'effectue de façon intermittente. De façon préférentielle, il est alors prévu sur cet arbre du rouleau d'amorçage un second accouplement à roue libre ou à effet unidirectionnel monté dans le même sens que le premier accouplement, afin de s'opposer à tout retour en arrière du rouleau d'amorçage pendant le mouvement alternatif de la bielle entraînée par l'excentrique.

On comprendra toutefois que n'importe quel autre dispositif réducteur peut être prévu entre le rouleau d'entraînement des bandes ou courroies et le rouleau d'amorçage, de préférence en combinaison avec un dispositif à roue libre comme indiqué.

Suivant une autre particularité, des doigts sont montés entre les bandes ou courroies pour éviter que les produits de récolte ne soient entraînés entre celles-ci et le rouleau d'amorçage au moment de la formation du noyau de balle. A cet effet, ces doigts s'étendent jusqu'au voisinage du rouleau d'amorçage, au droit de l'intervalle ménagé entre ce rouleau d'amorçage et le rouleau d'entraînement des bandes ou courroies prévu à poste fixe sur la presse.

La description qui va suivre, faite en regard des dessins annexés, donnés à titre non limitatif, permettra de mieux comprendre l'invention.

La Fig. 1 est une représentation schématique de profil d'une presse à balles cylindriques ou rondes comportant un rouleau d'amorçage avec entraînement suivant l'invention.

La Fig. 2 est une vue partielle de profil à plus grande échelle du mécanisme d'entraînement du rouleau d'amorçage.

La Fig. 3 est une vie en perspective de ce mécanisme.

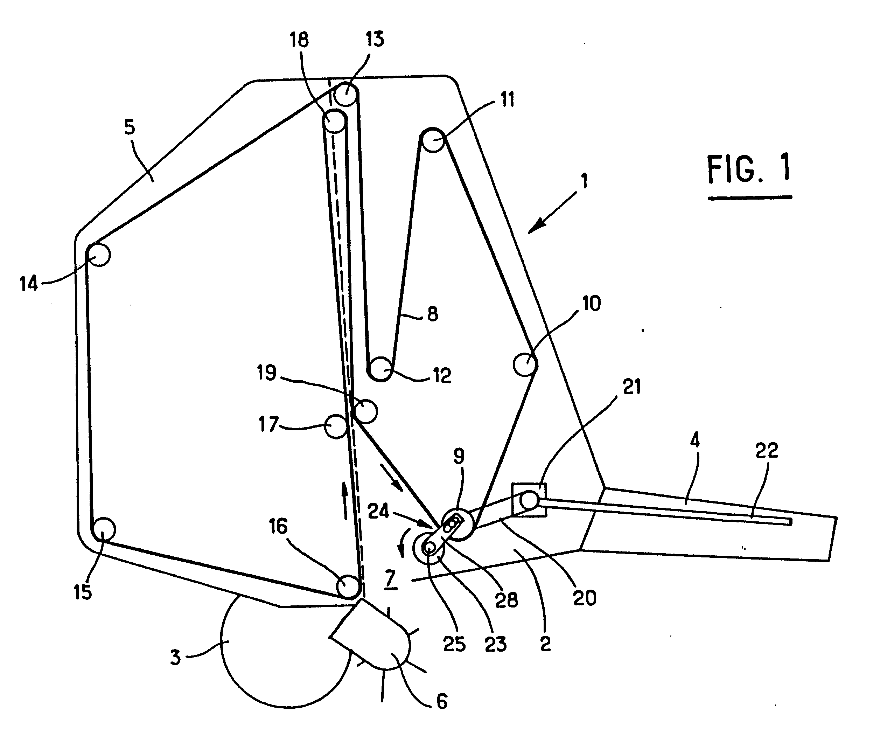

On a représenté sur la Fig. 1 une presse à balles cylindriques ou rondes désignée dans son ensemble par la référence 1, qui comporte un châssis avant 2 supporté par des roues 3 et pouvant être relié par un timon ou une flèche d'attelage 4 à un tracteur agricole. Cette presse comporte de la manière habituelle une porte arrière 5 qui peut pivoter autour d'un axe transversal horizontal supérieur, pour son relevage en vue du déchargement des balles terminées. Les produits sont ramassés sur le sol par un ramasseur 6 et transférés par un orifice 7 d'entrée des produits de récolte dans la chambre de la presse, entre des bandes ou courroies 8 qui passent d'une manière en soi classique sur des rouleaux fixes et sur des rouleaux de tension 9 - 19. Le rouleau 9 est un rouleau fixe d'entraînement des bandes ou courroies 8. Il est lui-même entraîné de façon positive au moyen d'une transmission 20 telle qu'une transmission par chaîne reliant ce rouleau 9 à une boîte de transfert 21 recevant l'énergie requise par un arbre 22 raccordé à l'arbre de prise de force du tracteur.

On a indiqué en 23, au voisinage du rouleau d'entraînement 9, un rouleau d'amorçage dont la fonction est en soi bien connue. Ce rouleau a pour but, au début de la formation d'une balle à partir des produits de récolte ramassés par le ramasseur 7, de participer à l'enroulement de ces produits de récolte pour former un noyau de balle.

Suivant l'invention, ce rouleau d'amorçage 23 est entraîné positivement en rotation à une vitesse lente au début de la formation d'une balle. Dans le cas présent, cet entraînement est assuré à partir du rouleau 9 qui entraîne les bandes ou courroies 8.

Afin d'obtenir pour le rouleau d'amorçage la vitesse de rotation réduite requise, le dispositif prévu entre ce rouleau d'amorçage et le rouleau d'entraînement 9, indiqué schématiquement en 24 sur la Fig. 1, est un dispositif réducteur.

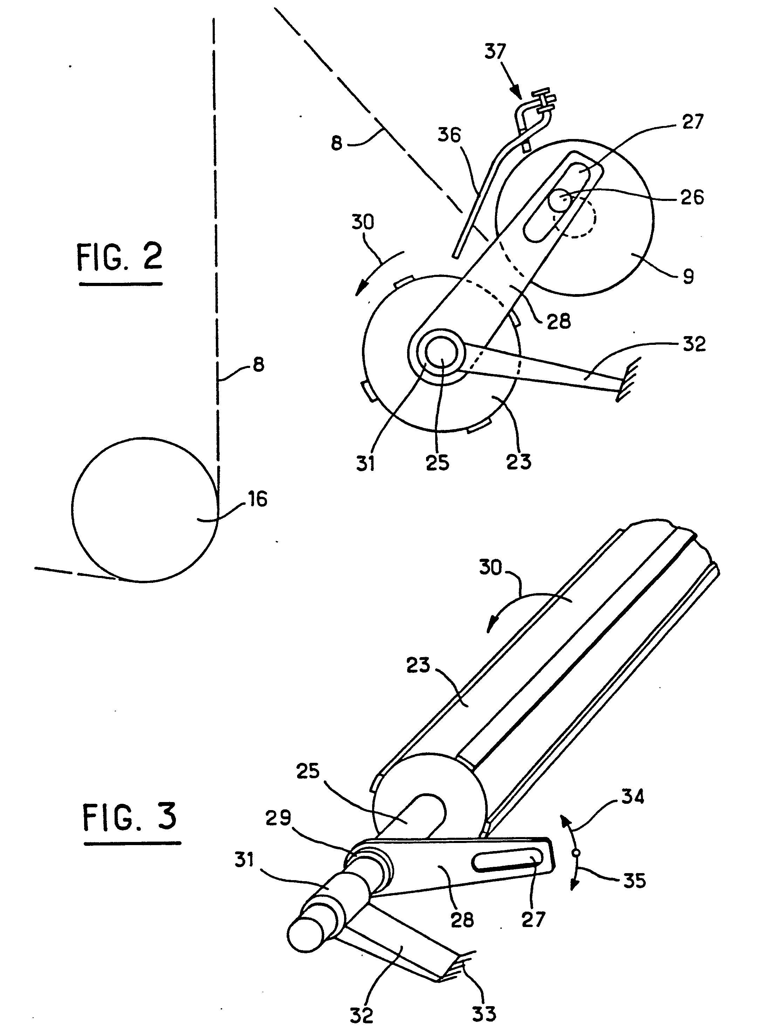

Un mode de réalisation de dispositif réducteur a été représenté sur les Fig. 2 et 3.

Sur ces Figures, on a désigné ici encore par la référence 9 le rouleau d'entraînement des bandes ou courroies 8 et par la référence 23 le rouleau d'amorçage, qui est calé sur un arbre 25.

Suivant l'invention, le rouleau d'entraînement 9 porte un excentrique 26 constitué par un maneton qui est engagé dans une fente 27 ménagée dans le sens longitudinal dans une bielle 28. Cette bielle est montée sur l'arbre 25 du rouleau d'amorçage 23 par l'intermédiaire d'un accouplement à effet unidirectionnel ou formant roue libre, indiqué schématiquement en 29.

De tels accouplements sont bien connus dans la technique. Ils peuvent comporter des aiguilles ou galets de coincement se déplaçant entre des bagues, la bague extérieure présentant des rampes de coincement, de sorte que lors du déplacement de la bielle 28 dans un sens, un déplacement angulaire est communiqué par elle à l'arbre 25 du rouleau d'amorçage 23, tandis que lors de son déplacement dans l'autre sens, la bielle pivote librement sur l'arbre 25. On a indiqué par une flèche en 30 le sens d'entraînement en rotation du rouleau d'amorçage.

Afin d'éviter avec certitude tout déplacement en rotation du rouleau d'amorçage dans le sens opposé à celui indiqué par la flèche 30, par exemple sous l'effet des frottements à l'intérieur de l'accouplement formant roue libre 29, il est prévu un second accouplement formant roue libre 31 du même type que le précédent, monté sur l'arbre 25 dans le même sens que l'accouplement 29. Cet accouplement formant roue libre 31 est porté par un bras 32 qui est fixé comme indiqué schématiquement en 33 sur le châssis de la presse.

Ainsi, lors du déplacement de la bielle 28 dans le sens indiqué par la flèche 34 en Fig. 3 sous l'effet de l'excentrique 27 dont la rotation est elle-même assurée par le rouleau 9 d'entraînement des bandes ou courroies de la presse, l'accouplement 29 intervient pour provoquer la rotation de l'arbre 25 et avec lui du rouleau d'amorçage 23 dans le sens de la flèche 30. Lors du déplacement de la bielle 28 en sens opposé, c'est-à-dire dans le sens de la flèche 35, aucun entraînement de l'arbre 25 ne se produit. Comme indiqué précédemment cet arbre 25 est en outre empêché de tourner en sens opposé du fait du blocage réalisé par l'accouplement formant roue libre 31 porté par le bras fixe 32.

On obtient de cette manière un entraînement intermittent à faible vitesse de l'arbre 25 et ainsi du rouleau d'amorçage 23 à partir du rouleau 9 qui assure l'entraînement des bandes ou courroies 8 de la presse.

Lorsque le noyau de la balle a été formé et lorsque cette balle atteint déjà un certain diamètre, elle a tendance, du fait de son contact avec le rouleau d'amorçage 23, à entraîner ce rouleau d'amorçage à une vitesse supérieure à sa vitesse d'entraînement à partir du mécanisme réducteur décrit ci-avant, également dans le sens de la flèche 30. Etant donné que les deux accouplements 29 et 31 sont du type formant roue libre et sont montés dans le même sens, ce rouleau d'amorçage 23 peut être entraîné librement par la balle en cours de formation sans endommagement du mécanisme réducteur.

Ainsi, on obtient un entraînement à faible vitesse au moment de la formation du noyau, avec une sécurité vis-à-vis de toute rotation en sens opposé, et une possibilité d'entraînement du rouleau d'amorçage à vitesse élevée par la balle quand celle-ci a atteint un certain diamètre.

Suivant l'invention, des doigts 36 sont fixés sur la presse en 37 et s'étendent entre les bandes ou courroies 8. Comme cela est visible sur la Fig. 2, les extrémités libres de ces doigts parviennent jusqu'au voisinage immédiat du rouleau d'amorçage 23 et les doigts chevauchent l'intervalle qui sépare le rouleau d'entraînement 9 de ce rouleau d'amorçage 23, de sorte qu'ils empêchent avec certitude toute pénétration des produits de récolte entre ces deux rouleaux.

Ce moyen de retenue se conjugue dans son effet à celui résultant de l'entraînement des produits de récolte exercé par le rouleau d'amorçage pour favoriser leur enroulement et ainsi la formation d'un noyau de balle dense.

Pour éviter un frottement trop sévère des courroies contre les doigts, ceux-ci sont libres d'osciller transversalement dans une certaine limite pour suivre le déplacement des courroies.

## Revendications

1. Presse à balles cylindriques ou rondes comprenant des jeux de bandes ou courroies (8) ménageant une chambre de formation d'une balle par enroulement, ainsi qu'un ramasseur (6) destiné à reprendre les produits de récolte sur le sol pour leur transfert à la chambre de formation de la balle à travers un intervalle ou orifice (7) d'entrée des produits, et un rouleau d'amorçage (23) disposé au voisinage de cet intervalle ou orifice (7) d'entrée des produits et entraîné positivement en rotation à l'aide d'un dispositif d'entraînement (26 - 29) caractérisée en ce que ledit dispositif assure un entraînement du rouleau d'amorçage (23) à une vitesse plus lente que celle des jeux de bandes ou courroies, le dit dispositif comprenant des moyens (29) pour interrompre cet entraînement en rotation lorsque le noyau de la balle a été formé et lorsque ce rouleau d'amorçage tend à être entraîné par la balle elle-même à une vitesse supérieure à sa vitesse d'entraînement par le dispositif (26 - 29).

2. Presse à balles cylindriques suivant la revendication 1, caractérisée en ce que l'entraînement du rouleau d'amorçage (23) au début de la formation d'une balle est continu.

3. Presse à balles cylindriques suivant la revendication 1, caractérisée en ce que l'entraînement du rouleau d'amorçage (23) au début de la formation d'une balle est intermittent.

4. Presse à balles cylindriques suivant l'une quelconque des revendications précédentes, caractérisée en ce que le dispositif (26 - 29) assure l'entraînement du rouleau d'amorçage (23) à partir du rouleau fixe (9) d'entraînement des bandes ou courroies (8) au voisinage duquel ce rouleau d'amorçage est placé.

5. Presse à balles cylindriques suivant la revendication 4, caractérisée en ce que le dispositif (26 - 29) est constitué par un mécanisme réducteur.

6. Presse à balles cylindriques suivant l'une quelconque des revendications précédentes, caractérisée en ce qu'un accouplement formant roue libre (29) est prévu entre le rouleau d'amorçage (23) et ledit dispositif d'entraînement à vitesse réduite, de façon telle que le rouleau d'amorçage soit entraîné librement par la balle à la vitesse requise après la formation du noyau.

7. Presse à balles cylindriques suivant la revendication 4 ou 5, caractérisée en ce qu'il est prévu sur le rouleau (9) d'entraînement des bandes ou courroies ou sur son arbre, un excentrique (26) relié par une bielle (28) et un accouplement à roue libre (29) à l'arbre (25) du rouleau d'amorçage (23).

8. Presse à balles cylindriques suivant la revendication 7, caractérisée en ce qu'il est prévu, sur l'arbre (25) du rouleau d'amorçage (23), un second accouplement à roue libre (31) monté dans le même sens que le premier accouplement à roue libre (29) et relié par sa bague extérieure à un point fixe (33) afin de s'opposer à tout retour en arrière du rouleau d'amorçage pendant le mouvement alternatif de la bielle (28) entraînée par l'excentrique (26).

9. Presse à balles cylindriques suivant l'une quelconque des revendications précédentes, caractérisée en ce que des doigts (36) sont montés entre les bandes ou courroies (8) et s'étendent jusqu'au voisinage du rouleau d'amorçage (23) au droit de l'intervalle prévu entre ce rouleau d'amorçage et le rouleau (9) d'entraînement des bandes ou courroies, afin d'éviter que les produits de récolte ne soient entraînés entre ces bandes ou courroies et ce rouleau d'amorçage,

## Patentansprüche

1. Presse für zylindrische oder runde Ballen mit einem Satz von Bändern oder Riemen (8), welche eine Kammer zur Formung eines Ballens durch Aufwickeln bildet, mit einem Aufsammler (6), der dazu bestimmt ist, die Ernteprodukte vom Boden aufzunehmen, damit sie durch einen Zwischenraum oder eine Eintrittsöffnung (7) für die Produkte in die Kammer zur Formung des Ballens überführt werden, sowie mit einer Startrolle (23), die benachbart dem Zwischenraum oder der Produkteintrittsöffnung (7) angeordnet und mit Hilfe einer Antriebseinrichtung (26 bis 29) positiv drehend angetrieben ist, dadurch gekennzeichnet, daß die genannte Einrichtung einen Antrieb der Startrolle (23) mit einer Geschwindigkeit sicherstellt, die langsamer als die des Satzes von Bändern oder Riemen ist, und daß die genannte Einrichtung Mittel (29) zum Unterbrechen des Drehantriebes aufweist, wenn der Kern des Ballens gebildet wird und wenn die Startrolle dazu neigt, durch den Ballen selbst mit einer Geschwindigkeit angetrieben zu werden, die höher ist als die Geschwindigkeit ihres Antriebes durch die Einrichtung (26 bis 29).

2. Presse für zylindrische Ballen nach Anspruch 1, dadurch gekennzeichnet, daß der Antrieb der Startrolle (23) bei Beginn der Bildung eines Ballens kontinuierlich ist.

3. Presse für zylindrische Ballen nach Anspruch 1, dadurch gekennzeichnet, daß des Antrieb der Startrolle (28) bei Beginn der Bildung eines Ballens intermittierend ist.

4. Presse für zylindrische Ballen nach irgendeinem der voranstehenden Ansprüche, dadurch gekennzeichnet, daß die Einrichtung (26 bis 29) den Antrieb der Startrolle (23) von einer fest angeordneten Antriebsrolle (9) für die Bänder oder Riemen (8) aus sicherstellt, in deren Nachbarschaft die Startrolle angeordnet ist.

5. Presse für zylindrische Ballen nach Anspruch 4, dadurch gekennzeichnet, daß die Einrichtung (26 bis 29) durch einen Untersetzungsmechanismus gebildet wird.

6. Presse für zylindrische Ballen nach irgendeinem der voranstehenden Ansprüche, dadurch gekennzeichnet, daß zwischen der Startrolle (23) und der genannten Einrichtung zum Antrieb mit reduzierter Geschwindigkeit eine einen Freilauf (29) bildende Kupplungseinrichtung angeordnet ist, derart, daß die Startrolle durch den Ballen mit einer Geschwindigkeit frei mitgenommen ist, die nach Bildung des Kernes erforderlich ist.

7. Presse für zylindrische Ballen nach Anspruch 4 oder 5, dadurch gekennzeichnet, daß an der Antriebsrolle (9) für die Bänder oder Riemen oder auf deren Welle ein Exzenter (26) vorgesehen ist, der über eine Stange (28) und eine Freilaufkupplung (29) mit einer Welle (25) der Startrolle (23) verbunden ist.

8. Presse für zylindrische Ballen nach Anspruch 7, dadurch gekennzeichnet, daß auf der Welle (25) der Startrolle (23) eine zweite Freilaufkupplung (31) vorgesehen ist, die im gleichen Sinne wie die erste Freilaufkupplung (29) montiert und mit ihrem äußeren Ring mit einem Festpunkt (33) verbunden ist, um jeder Rückdrehung der Startrolle während der alternierenden Bewegung der Stange (28) infolge des Antriebes durch den Exzenter (26) entgegenzuwirken.

9. Presse für zylindrische Ballen nach irgendeinem der voranstehenden Ansprüche, dadurch gekennzeichnet, daß Finger (36) zwischen den Bändern oder Riemen (8) montiert sind und sich quer durch den Zwischenraum zwischen der Startrolle und der Antriebsrolle (9) für die Bänder oder Riemen bis in die Nähe der Startrolle (23) erstrecken, um zu verhindern, daß die Ernteprodukte in den Bereich zwischen den Bändern oder Riemen und der Startrolle eingezogen werden.

## Claims

1. A baler for making cylindrical or round bales comprising sets of bands or belts (8) forming a chamber for forming a bale by winding, as well as a pick-up (6) designed to collect the crop material from the ground to transfer it to the bale forming chamber through a material entry gap or orifice (7), and a starting roller (23) arranged in the vicinity of this material entry gap or orifice (7) and driven positively in rotation with the aid of a drive device (26-29), characterized in that said device ensures drive of the starting roller (23) at a lower speed than that of the sets of bands or belts, said device comprising means (24) of interrupting this rotational drive when the bale core has been formed and when this starting roller has a tendency to be driven by the bale itself at a higher speed than the speed at which it is driven by the device (26-29).

2. A baler for making cylindrical bales according to claim 1, characterized in that driving of the starting roller (23) at the beginning of bale formation is continuous.

3. A baler for making cylindrical bales according to claim 1, characterized in that driving of the starting roller (23) at the beginning of bale formation is intermittent.

4. A baler for making cylindrical bales according to any ons of the preceding claims, characterized in that the device (26-29) ensures drive of the starting roller (23) by means of the fixed roller (9) for driving the bands or belts (8), in the vicinity of which fixed roller (9) this starting roller is located.

5. A baler for making cylindrical bales according to claim 4, characterized in that the device (26-29) consists of a reducing mechanism.

6. A baler for making cylindrical bales according to any one of the preceding claims, characterized in that a coupling forming a free wheel (29) is provided between the starting roller (23) and said low speed drive device, in such a way that the starting roller is driven freely by the bale at the required speed after formation of the core.

7. A baler for making cylindrical bales according to claim 4 or claim 5, characterized in that there is provided on the band or belt drive roller (9) or on its shaft, an eccentric (26) connected by a connecting rod (28) and a free wheel coupling (29) to the shaft (25) of the starting roller (23).

8. A baler for making cylindrical bales according to claim 7, characterized in that there is provided, on the shaft (25) of the starting roller (23), a second free wheel coupling (31) mounted in the same direction as the first free wheel coupling (29) and connected by its outer ring to a fixed point (33) in order to oppose any rearward return of the starting roller during the alternating movement of the connecting rod (28) driven by the eccentric (26).

9. A baler for making cylindrical bales according to any one of the preceding claims, characterized in that fingers (36) are mounted between the bands or belts (8) and extend as far as the vicinity of the starting roller (23) opposite the gap provided between this starting roller and the band or belt driving roller (9), in order to prevent the crop material from being driven between these bands or belts and this starting roller.

FIG. 1

0 150 631

0 150 631

FIG. 2

FIG. 3